# FASCICULE DE BREVET EUROPEEN

(11) **EP 1 484 673 B1**
(45) Date de publication et mention de la délivrance du brevet: **02.12.2015**
(21) Numéro de dépôt: 04291203.0
(22) Date de dépôt: 11.05.2004
(51) Int. Cl.: G06F 3/14, H04L 29/06

(54) **Procédé et système de transmission d'information sur un aéronef**
Verfahren und System zur Übertragung von Luftfahrzeuginformationen
Method and system for transmission of aircraft information

(30) Priorité: 04.06.2003 FR 0306734
(43) Date de publication de la demande: 08.12.2004
(73) Titulaire: AIRBUS OPERATIONS (SAS), 31060 Toulouse (FR)
(72) Inventeur: Berthon, Valérie, 31770 Colomiers (FR); Bernard, Denys, 31480 Pelleport (FR); Fernandez-Ramos, Yvan, 2 Rue de Montesquieu 31200 Toulouse (FR)
(74) Mandataire: Bonnetat, Christian

(56) Documents cités:
- EP-A- 0 475 581
- US-A- 5 768 528
- US-A1- 2002 080 171
- MCCARTNEY R ET AL: "An ARINC D-Size, liquid crystal display for aircraft primary flight instruments" DIGITAL AVIONICS SYSTEMS CONFERENCE, 1994. 13TH DASC., AIAA/IEEE PHOENIX, AZ, USA 30 OCT.-3 NOV. 1994, NEW YORK, NY, USA,IEEE, 30 octobre 1994 (1994-10-30), pages 620-625, XP010127068 ISBN: 0-7803-2425-0
- HAMZA R ET AL: "Video to information (V21) system enabling old commercial cockpit instruments to participate in the advanced information retrieval and safety services" 21TH. DASC. THE 21TH. DIGITAL AVIONICS SYSTEMS CONFERENCE PROCEEDINGS. IRVINE, CA, OCT. 27 - 31, 2002, DIGITAL AVIONICS SYSTEMS CONFERENCE, NEW YORK, NY : IEEE, US, vol. VOL. 1 OF 2. CONF. 21, 27 octobre 2002 (2002-10-27), pages 786-795, XP010616254 ISBN: 0-7803-7367-7

## Description

La présente invention concerne un procédé et un système de transmission d'information sur un aéronef.

On sait que la plupart des aéronefs actuellement en service, notamment les avions de transport civil, sont équipés de dispositifs électroniques embarqués, notamment des calculateurs, dits "de type avionique". Ces dispositifs électroniques sont utilisés, notamment, pour des fonctions stratégiques du vol de l'aéronef telles que les commandes de vol. Ces dispositifs doivent, par conséquent, présenter un niveau de fiabilité très élevé, apte à garantir un taux de défaillance de l'aéronef inférieur à celui exigé par les autorités de certification. Les réseaux de communication et les liaisons entre de tels dispositifs (calculateurs) embarqués de type avionique, doivent répondre aux mêmes exigences de fiabilité.

Certains avions de transport modernes, tels que les avions de type "Airbus A340-600" et "Airbus A318" par exemple, comportent également des équipements embarqués dits "monde ouvert" ("open world" en anglais), lesquels ne sont pas spécifiques aux applications aéronautiques. Ces équipements "monde ouvert" sont des moyens d'interface (de type "homme-machine") à la disposition d'un opérateur, en particulier un pilote, de l'avion. A titre d'exemple non limitatif, on peut citer des calculateurs dits industriels, des ordinateurs portables, des imprimantes, ... Ces équipements "monde ouvert" présentent un niveau de fiabilité plus faible que celui des dispositifs précités de type avionique. Ils présentent néanmoins l'avantage d'être beaucoup moins chers que ces derniers et leur niveau de fiabilité est suffisant pour des applications qui ne sont pas directement liées à des manoeuvres de l'avion, telles que par exemple la consultation d'une documentation de maintenance ou l'aide au diagnostic pour la maintenance. Lorsqu'un avion comporte des moyens d'interface de type monde ouvert, il est parfois intéressant de pouvoir utiliser un ou plusieurs de ces moyens d'interface, pour permettre à un opérateur d'échanger des informations avec des dispositifs de type avionique. Cela peut notamment être utile, dans le cadre d'opérations de maintenance de l'avion, pour consulter des valeurs de paramètres disponibles dans des dispositifs de type avionique ou pour tester certains composants de l'avion (par exemple des circuits électriques, des gouvernes, ...) dont la manoeuvre est commandée par de tels dispositifs de type avionique.

Toutefois, même si ces opérations de maintenance présentent un caractère de criticité moindre que celui des phases de vol de l'avion, le niveau de fiabilité desdits moyens d'interface de type monde ouvert peut ne pas être suffisant dans certains cas. Ainsi, à titre d'exemple, lorsqu'une opération de maintenance implique la manoeuvre d'une gouverne, il est impératif que cette dernière ne se déclenche pas de façon intempestive, puisqu'un déclenchement intempestif pourrait être dangereux pour des personnels se trouvant à proximité de ladite gouverne. De même, lorsqu`une opération de maintenance suppose la manipulation d'équipements électriques, l'opérateur doit s'assurer que ces équipements ne sont pas sous tension, une information erronée pouvant avoir des conséquences fatales.

Par conséquent, il est généralement fortement déconseillé, notamment pour des raisons de fiabilité et donc de sécurité, de mettre en oeuvre sur un aéronef une transmission d'informations sensibles entre un dispositif de type avionique, tel que décrit précédemment, et un moyen d'interface de type précité.

Par le document EP-1 370 047 visé à l'article 54(3) CBE, on connaît une solution qui permet de remédier, au moins partiellement, à ces inconvénients, et qui est appliquée in des valeurs numériques. Ce document EP-1 370 047 concerne un procédé de transmission de valeurs numériques sur un aéronef entre un dispositif de type avionique et un moyen d'interface qui est à la disposition d'un opérateur dudit aéronef, ledit dispositif et ledit moyen d'interface étant susceptibles d'être reliés ensemble par l'intermédiaire d'une liaison de transmission de données. Selon ce document anterieur, pour transmettre au moins une valeur numérique:
a) on forme un message textuel correspondant à ladite valeur numérique ;
b) on transmet ledit message textuel par l'intermédiaire de ladite liaison de transmission de données ;
c) on analyse ledit message textuel transmis, pour détecter une éventuelle anomalie dudit message textuel transmis ; et
d) si on ne détecte aucune anomalie à l'étape c), on traite ledit message textuel transmis.

Ainsi, comme grâce à ce document EP-1 370 047, on transmet, non pas directement la valeur numérique que l'on désire transmettre, mais un message textuel qui correspond à cette valeur numérique (par exemple "DEUX" pour "2"), et comme une erreur de transmission d'un tel message textuel peut être détectée facilement et de façon fiable, on peut détecter la plupart des anomalies dans la transmission de données entre ledit dispositif de type avionique et ledit moyen d'interface, ce qui permet de réaliser une transmission de données très fiable.

La présente invention a pour objet de remédier aux inconvénients précités. Elle concerne un procédé permettant de réaliser sur un aéronef une transmission particulièrement fiable de tout type d'information, d'un dispositif de type avionique vers au moins un moyen d'interface (de type "monde ouvert") qui est à la disposition d'un opérateur dudit aéronef, ledit dispositif et ledit moyen d'interface étant susceptibles d'être reliés ensemble.

Selon l'invention, ledit procédé est remarquable en ce que, pour transmettre une information dudit dispositif vers ledit moyen d'interface :
a) on détermine, à l'aide d'un moyen de type avionique, une représentation de ladite information à transmettre, sous la forme d'au moins une image ;
b) on transmet cette représentation sous la forme d'au moins une image audit moyen d'interface ; et
c) ledit moyen d'interface affiche, sur un écran de visualisation, ladite image correspondant à la représentation de ladite information.

Il résulte du codage d'une information sous forme d'image que celle-ci est représentée au moyen d'un nombre de symboles (bits, octets, ...), représentant des pixels de l'image, plus élevé que si cette information était représentée directement sous forme numérique ou binaire. Ainsi, en cas d'erreur lors de la transmission de cette information, la probabilité que l'information ne soit pas détectée comme étant erronée est beaucoup plus faible lorsque cette information est transmise sous forme d'image que lorsqu'elle est transmise sous une forme plus condensée, par exemple numérique. De préférence, l'image est envoyée selon un format de type matriciel ou similaire, et non pas sous une forme vectorielle davantage susceptible d'être erronée de façon non détectable par l'opérateur.

Ainsi, en cas d'erreur affectant l'image (cette erreur pouvant être due notamment à la transmission du "monde avionique" vers le "monde ouvert", à l'affichage de l'image par le moyen d'interface, ...), soit cette erreur n'affecte qu'une infime partie de l'image (un ou quelques pixels par exemple) et il en résulte que l'information reste compréhensible par l'opérateur qui peut décider de considérer cette information comme valide, soit l'erreur affecte une partie plus importante de l'image, voire même sa totalité, et dans ce cas l'opérateur ne considère pas l'information comme valide. Dans ce dernier cas, il peut, par exemple, demander la retransmission de l'information,

On notera que l'image d'une information ou d'un message est formée par concaténation des images élémentaires des caractères constitubant ladite information ou ledit message. Par exemple, l'image de 'ABCD' est constituée en juxtaposant les images élémentaires de 'A', 'B', 'C' et 'D'.

Dans un premier mode de réalisation simplifié, ledit moyen de type avionique qui détermine une représentation de ladite information fait partie dudit dispositif de type avionique.

En outre, dans un second mode de réalisation préféré, ledit diapositif (de type avionique) fait partie d'un premier réseau de dispositifs de type avionique, ledit moyen d'interface fait partie d'un second réseau de moyens d'interface, et ledit moyen de type avionique qui détermine une représentation de ladite information correspond à un module d'interface prévu entre lesdits premier et second réseaux. Ce mode de réalisation préféré présente l'avantage de centraliser dans un seul équipement (ledit module d'interface) la fonction de transformation d'informations sous la forme d'images représentant ces informations, plutôt que de dupliquer cette fonction dans chacun des différents dispositifs de type avionique dudit premier réseau,

Bien entendu, de façon avantageuse, on peut également transmettre vau moins une indication dudit moyen d'interface vers ledit dispositif.

Selon l'invention, une image affichée par le moyen d'interface comporte au moins une zone sensible qui peut être désignée et validée par un opérateur à l'aide de moyens appropriés, est, lorsqu'une zone sensible d'une image est désignée et validée, ledit moyen d'interface transmet audit dispositif les coordonnées de ladite zone sensible sur l'image.

Dans ce cas, de préférence, une image affichée par ledit moyen d'interface comporte une pluralité de zones sensibles, et la somme des surfaces de l'ensemble desdites zones sensibles est inférieure à un pourcentage prédéterminé de la surface totale de ladite image affichée.

En outre, avantageusement, lorsque ledit dispositif reçoit les coordonnées d'une première zone sensible qui a été désignée et validée, il vérifie la conformité de ces coordonnées et, si ces coordonnées sont conformes, ledit dispositif renvoie une nouvelle information, dont l'image correspondante comporte une zone sensible de confirmation qui doit être désignée et validée par un opérateur pour confirmer la désignation et la validation initiales de ladite première zone sensible.

Dans ce cas, de préférence, ladite zone sensible de confirmation est prévue à côté de ladite première zone sensible initialement désignée et validée.

La présente invention concerne également un système de transmission d'information, embarqué sur un aéronef, ledit système comportant:
- au moins un dispositif de type avionique ;
- au moins un moyen d'interface à la disposition d'un opérateur ; et
- des moyens de transmission d'information susceptibles de relier ensemble ledit dispositif et ledit moyen d'interface.

Selon l'invention, ledit système est remarquable en ce qu'il comporte un moyen de type avionique pour déterminer, sous la forme d'au moins une image, une représentation d'une information à transmettre dudit dispositif vers ledit moyen d'interface et pour transmettre cette représentation sous la forme d'au moins une image audit moyen d'interface, et en ce que ledit moyen d'interface est formé pour afficher, sur au moins un écran de visualisation, ladite image correspondant à la représentation de ladite information.

En outre, selon l'invention :
- dans une premier mode de réalisation, ledit moyen de type avionique fait partie dudit dispositif ; et
- dans un second mode de réalisation, ledit dispositif fait partie d'un premier réseau (d'une pluralité) de dispositifs de type avionique, ledit moyen d'interface fait partie d'un second réseau (d'une pluralité) de moyens d'interface, et ledit moyen de type avionique correspond à un module d'interface prévu entre lesdits premier et second réseaux.

Par ailleurs, avantageusement ledit système est formé pour permettre également la transmission au moins d'une indication dudit moyen d'interface vers ledit dispositif.

En outre, selon l'invention, ledit moyen d'interface comporte au moins un dispositif de commande de curseur qui est agencé de manière à pouvoir être actionné par un opérateur et qui comprend au moins :
- un moyen de désignation actionnable, susceptible de déplacer un curseur sur une image affichée sur l'écran de visualisation de manière à désigner une zone sensible de ladite image en faisant apparaître un marqueur ; et
- un moyen de validation actionnable, susceptible de valider une zone sensible qui est muni dudit marqueur.

Les figures du dessin annexé feront bien comprendre comment l'invention peut être réalisée. Sur ces figures, des références identiques désignent des éléments semblables.

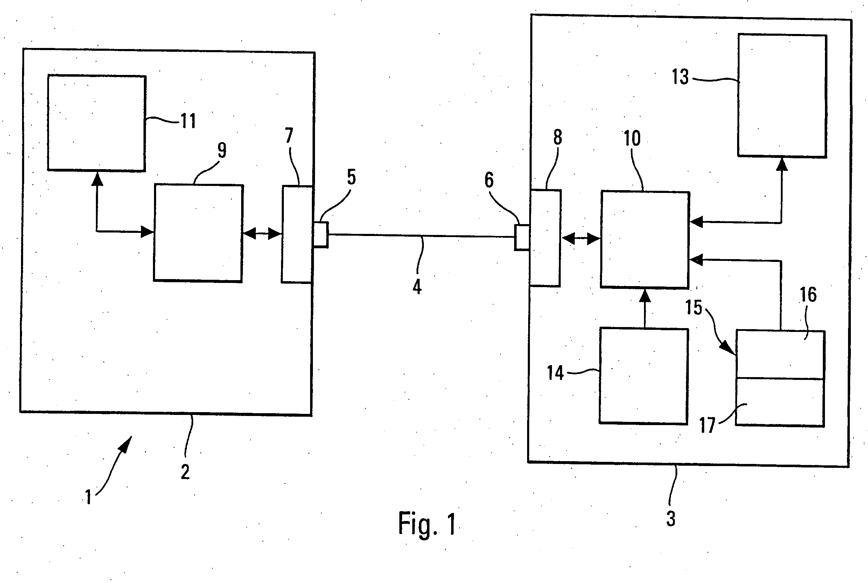

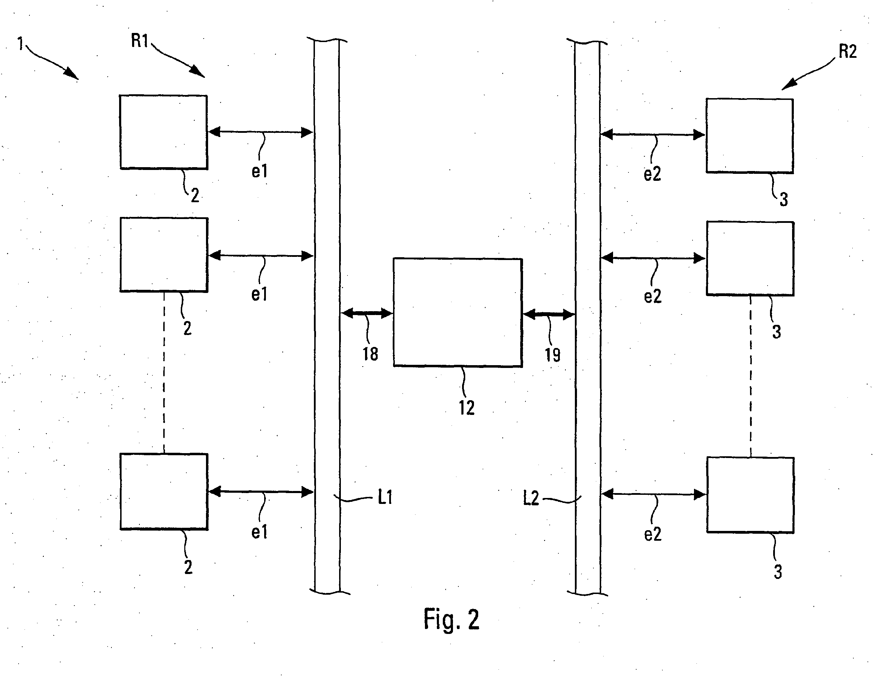

Les figures 1 et 2 sont les schémas synoptiques de deux modes de réalisation différents d'un système de transmission d'information conforme à l'invention.

Le système 1 conforme à l'invention et représenté schématiquement sur les figures 1 et 2, est destiné à la transmission d'information sur un aéronef non représenté, en particulier un avion de transport civil.

Plus précisément, ledit système 1 est du type comportant, comme représenté sur la figure 1 :
- au moins un dispositif électronique 2 de type avionique, notamment un calculateur, par exemple un calculateur de commande de vol, qui est monté à poste fixe sur l'aéronef et qui présente un niveau de fiabilité très élevé, apte à garantir un taux de défaillance de l'aéronef inférieur à celui exigé par les autorités de certification ;
- au moins un moyen d'interface 3, par exemple un ordinateur portable, qui est à la disposition d'un opérateur de l'aéronef, qui est de type "monde ouvert", qui est également embarqué sur l'aéronef et qui présente une fiabilité réduite de manière à ne pas garantir généralement le taux de défaillance exigé par les autorités de certification de l'aéronef ; et
- au moins une liaison de transmission d'information 4, de type usuel, susceptible d'être connectée par des moyens de connexion 5 et 6 usuels prévus à ses extrémités, respectivement, au dispositif 2 et au moyen d'interface 3, de manière à relier ensemble ces derniers et à permettre la mise en oeuvre d'une transmission d'information entre eux.

Par ailleurs, ledit dispositif 2 et ledit moyen d'interface 3 comportent également; chacun:
- un moyen d'acquisition de données 7, 8 ; et
- une unité de traitement de données 9, 10 qui est reliée audit moyen d'acquisition de données 7, 8.

L'objet du système 1 est, notamment, de permettre la transmission d'information du dispositif 2 vers le moyen d'interface 3.

Pour ce faire, selon l'invention, ledit système 1 comporte un moyen 11, 12 de type avionique (c'est-à-dire un moyen 11, 12 qui présente un niveau de fiabilité très élevé de manière à garantir le taux de défaillance exigé par les autorités de certification de l'aéronef) pour déterminer, sous la forme d'au moins une image, une représentation d'une information à transmettre dudit dispositif 2 vers ledit moyen d'interface 3 et pour transmettre cette représentation sous la forme d'au moins une image audit moyen d'interface 3, et ledit moyen d'interface 3 est formé pour afficher, sur au moins un écran de visualisation 13, ladite image correspondant à la représentation de ladite information.

Il résulte du codage d'une information sous forme d'image que celle-ci est représentée au moyen d'un nombre de symboles (bits, octets, ...), représentant des pixels de l'image, plus élevé que si cette information était représentée directement sous forme numérique ou binaire. Ainsi, en cas d'erreur lors de la transmission de cette information, la probabilité que l'information ne soit pas détectée comme étant erronée est beaucoup plus faible lorsque cette information est transmise sous forme d'image que lorsqu'elle est transmise sous une forme plus condensée, par exemple numérique. De préférence, l'image est envoyée selon un format de type matriciel ou similaire, et non pas sous une forme vectorielle davantage susceptible d'être erronée de façon non détectable par l'opérateur.

Ainsi, en cas d'erreur affectant l'image (cette erreur pouvant être due notamment à la transmission du "monde avionique'' vers le "monde ouvert", à l'affichage de l'image par le moyen d'interface 3, ...), soit cette erreur n'affecte qu'une infime partie de l'image (un ou quelques pixels par exemple) et il en résulte que l'information reste compréhensible par l'opérateur qui peut décider de considérer cette information comme valide, soit l'erreur affecte une partie plus importante de l'image, voire même sa totalité, et dans ce cas l'opérateur ne considère pas l'information comme valide. Dans ce dernier cas, il peut, par exemple, demander la retransmission de l'information, à l'aide d'un moyen d'actionnement approprié 14, par exemple un clavier, du moyen d'interface 3.

Dans un mode de réalisation particulier représenté sur la figure 1, la représentation d'une information sous forme d'une image est engendrée directement par le dispositif 2 de type avionique, à l'aide dudit moyen 11 qui est intégré dans ledit dispositif 2 et qui est donc également de type avionique.

Bien entendu, dans le cadre de la présente invention, on peut également transmettre au moins une indication dudit moyen d'interface 3 vers ledit dispositif 2, par exemple à l'aide dudit moyen d'actionnement 14.

Dans un mode de réalisation particulier, une image qui est affichée par le moyen d'interface 3 sur l'écran de visualisation 13 comporte au moins une zone sensible qui peut être désignée et validée par un opérateur à l'aide de moyens 15 appropriés, précisés ci-dessous, et, lorsqu'une zone sensible d'une image est désignée et validée, ledit moyen d'interface 3 transmet audit dispositif 2 les coordonnées de ladite zone sensible sur l'image.

Lesdits moyens appropriés 15 comprennent un dispositif de commande de curseur 15, par exemple une souris d'ordinateur ou une boule rotative, qui est agencé de manière à pouvoir être actionné par un opérateur et qui comprend au moins :
- un moyen de désignation actionnable 16, susceptible de déplacer un curseur sur une image affichée sur l'écran de visualisation 13 de manière à désigner une zone sensible de ladite image en faisant apparaître un marqueur ou "focus", c'est-à-dire en marquant ou en mettant en évidence cette zone sensible, en particulier par un changement d'apparence tel qu'un changement de couleur ou une surbrillance par exemple ; et
- un moyen de validation actionnable 17, susceptible de valider une zone sensible qui est muni dudit marqueur.

De préférence, une image affichée par ledit moyen d'interface 3 comporte une pluralité de zones sensibles, ce qui permet de faire un choix parmi une pluralité d'alternatives différentes possibles, présentées respectivement par lesdites zones sensibles. Dans ce cas, la somme des surfaces de l'ensemble desdites zones sensibles est inférieure, de préférence, à un pourcentage prédéterminé, par exemple 5%, de la surface totale de ladite image affichée.

La probabilité qu'une valeur erronée de la position du curseur reçue par le moyen 11, 12 de type avionique corresponde à une autre zone sensible que celle sélectionnée par l'opérateur, est d'autant plus faible que ledit pourcentage prédéterminé est faible.

En outre, lorsque ledit dispositif 2 reçoit les coordonnées d'une première zone sensible de l'image qui a été désignée et validée à l'aide des moyens 15, il vérifie la conformité de ces coordonnées (par rapport à l'information émise initialement sous la forme de ladite image) et, si ces coordonnées sont conformes, ledit dispositif 2 renvoie (vers le moyen d'interface 3) une nouvelle information, dont l'image correspondante comporte une zone sensible de confirmation qui doit être désignée et validée par un opérateur (par l'intermédiaire desdits moyens 15) pour confirmer la désignation et la validation initiales de ladite première zone sensible.

Dans ce cas, de préférence, ladite zone sensible de confirmation est prévue à côté de ladite première zone sensible initialement désignée et validée.

Cela permet à l'opérateur de vérifier de façon intuitive et ergonomique que l'information reçue par ledit moyen 11, 12 de type avionique corresponde bien à son action (initiale) sur les moyens 15, avant de confirmer son choix s'il y a lieu.

En outre, dans un second mode de réalisation (préféré) représenté sur la figure 2, ledit dispositif 2 fait partie d'un réseau R1 de dispositifs 2 de type avionique, et ledit moyen d'interface 3 fait partie d'un réseau R2 de moyens d'interface 3.

Les différents moyens d'interface 3 dudit réseau R2 sont semblables au moyen d'interface 3 décrit précédemment en relation avec la figure 1. Ces différents moyens d'interface 3 sont reliés directement (par des liaisons e2) à une liaison L2 de transmission d'information dudit réseau R2.

De même, les différents dispositifs 2 du réseau R1 sont reliés directement (par des liaisons e1) à une liaison L1 de transmission d'information dudit réseau R1.

Ces dispositifs 2 de la figure 2 sont semblables au dispositif 2 de la figure 1, à l'exception du moyen de type avionique pour déterminer une représentation d'une information sous la forme d'une image. Plus précisément, lesdits dispositifs 2 de la figure 2 ne comportent pas ledit moyen 11.

En effet, dans ce second mode de réalisation, ledit moyen 12 de type avionique qui détermine une représentation de ladite information sous forme d'image, correspond à un module d'interface 12 qui est prévu entre lesdits réseaux R1 et R2, en étant relié par les liaisons 18 et 19 respectivement auxdites liaisons L1 et L2 desdits réseaux R1 et R2. Ce mode de réalisation préféré présente l'avantage de centraliser dans un seul équipement (ledit module d'interface 12) la fonction de transformation d'informations sous la forme d'images représentant ces informations, plutôt que de dupliquer cette fonction dans chacun des différents dispositifs 2 de type avionique dudit réseau R1.

L'information envoyée par un dispositif 2 vers un moyen d'interface 3, circule donc :
- sous forme d'un texte balisé, dudit dispositif 2 audit module d'interface 12, via lesdites liaisons e1*,* L1 et 18, ce qui permet de ne pas surcharger le réseau R1 avec des images ; et
- sous forme d'une image, dudit module d'interface 12 audit moyen d'interface 3, via lesdites liaisons 19, L2 et e2.

Dans le sens inverse (c'est-à-dire d'un moyen d'interface 3 vers un dispositif 2), le système 1 permet notamment la transmission d'actions simples réalisées par un utilisateur sur ledit moyen d'interface 3, en particulier à l'aide des moyens 14 et 15.

## Revendications

1. Procédé de transmission d'information sur un aéronef, d'un dispositif (2) de type avionique vers un moyen d'interface (3) qui est à la disposition d'un opérateur dudit aéronef, ledit dispositif (2) et ledit moyen d'interface (3) étant susceptibles d'être reliés ensemble, procédé selon lequel, pour transmettre une information dudit dispositif (2) vers ledit moyen d'interface (3) :
a) une représentation de ladite information à transmettre est déterminée a l'aide d'un moyen (11, 12) de type avionique, sous la forme d'au moins une image ;
b) cette représentation est transmise sous la forme d'au moins une image audit moyen d'interface (3) ; et
c) Ladite image correspondant à la représentation de ladite information est affichée sur un écran de visualisarion (13) par ledit moyen d'interface (3), **caractérisé en ce qu'**une image affichée par le moyen d'interface (3) comporte au moins une zone sensible qui peut être désignée et validée par un opérateur à l'aide de moyens (15) appropriés, est **en ce que**, lorsqu'une zone sensible d'une image est désignée et validée, ledit moyen d'interface (3) transmet audit dispositif (2) les coordonnées de ladite zone sensible sur l'image.

2. Procédé selon la revendication 1,
**caractérisé en ce que** ledit moyen (11) de type avionique qui détermine une représentation de ladite information fait partie dudit dispositif (2).

3. Procédé selon la revendication 1,
**caractérisé en ce que** ledit dispositif (2) fait partie d'un premier réseau (R1) de dispositifs (2) de type avionique, **en ce que** ledit moyen d'interface (3) fait partie d'un second réseau (R2) de moyens d'interface (3), et **en ce que** ledit moyen (12) de type avionique qui détermine une représentation de ladite information correspond à un module d'interface (12) prévu entre lesdits premier et second réseaux (R1, R2).

4. Procédé selon l'une quelconque des revendications précédentes, **caractérisé en ce qu'**un opérateur peut demander la retransmission d'une information, à l'aide dudit moyen d'interface (3).

5. Procédé selon l'une quelconque des revendications précédentes, **caractérisé en ce qu'**au moins une indication dudit moyen d'interface (3) vers ledit dispositif (2) peut également être transmis.

6. Procédé selon l'une quelconque des revendication précédentes, **caractérisé en ce qu'**une image affichée par ledit moyen d'interface (3) comporte une pluralité de zones sensibles, et **en ce que** la somme des surfaces de l'ensemble desdites zones sensibles est inférieure à un pourcentage prédéterminé de la surface totale de ladite image affichée.

7. Procédé selon l'une quelconque des revendications précédentes, **caractérisé en ce que**, lorsque ledit dispositif (2) reçoit les coordonnées d'une première zone sensible qui a été désignée et validée, la conformité de ces coordonnées est vérifiée et, si ces coordonnées sont conformes, ledit dispositif (2) renvoie une nouvelle information, dont l'image correspondante comporte une zone sensible de confirmation qui doit être désignée et validée par un opérateur pour confirmer la désignation et la validation initiales de ladite première zone sensible.

8. Procédé selon la revendication 7,
caractérisé en ce qui ladite zone sensible de confirmation est prévue à côté de ladite première zone sensible initialement désignée et validée.

9. Système de transmission d'information embarqué sur un aéronef, ledit système (1) comportant :
- au moins un dispositif (2) de type avionique ;
- au moins un moyen d'interface (3) à la disposition d'un opérateur ;
- des moyens de transmission d'information (4 ; e1, L1, 18, 12, 19, L2, e2) susceptibles de relier ensemble ledit dispositif (2) est ledit moyen d'interface (3) ;
- un moyen (11, 12) de type avionique pour déterminer, sous la forme d'au moins une image, une représentation d'une information à transmettre dudit dispositif (2) vers ledit moyen d'interface (3) et pour transmettre cette représentation sous la forme d'au moins une image audit moyen d'interface (3), ledit moyen d'interface (3) étant formé pour afficher, sur au moins un écran de visualisation (13), ladite image correspondant à la représentation de ladite information,
**caractérisé en ce que** ledit moyen d'interface (3) comporte au moins un dispositif de commande de curseur (15) qui est agencé de manière à pouvoir être actionné par un opérateur et qui comprend au moins :
- un moyen de désignation actionnable (16), susceptible de déplacer un curseur sur une image affichée sur l'écran de visualisation (13) de manière à désigner une zone sensible de ladite image en faisant apparaître un marqueur ; et
- un moyen de validation actionnable (17), susceptible de valider une zone sensible qui est muni dudit marqueur.

10. Système selon la revendication 9,
**caractérisé en ce que** ledit moyen (11) de type avionique fait partie dudit dispositif (2).

11. Système selon la revendication 9,
**caractérisé en ce que** ledit dispositif (2) fait partie d'un premier réseau (R1) de dispositifs (2) de type anionique, **en ce que** ledit moyen d'interface (3) fait partie d'un second réseau (R2) de moyens d'interface (3), et **en ce que** ledit moyen (12) de type avionique correspond à un module d'interface (12) prévu entre lesdits premier et second réseaux (R1, R2).

12. Système selon l'une quelconque des revendications 9 à 11,
**caractérisé en ce qu'**il est formé pour permettre également la transmission au moins d'une indication dudit moyen d'interface (3) vers ledit dispositif (2).

## Patentansprüche

1. Verfahren zur Übertragung von Luftfahrzeuginformationen von einer Avionikvorrichtung (2) an ein Schnittstellenmittel (3), das einem Bediener des Luftfahrzeugs zur Verfügung steht, wobei die Vorrichtung (2) und das Schnittstellenmittel (3) verbunden sein können, wobei gemäß diesem Verfahren, um eine Information von der Vorrichtung (2) an das Schnittstellenmittel (3) zu übertragen:
a) eine Darstellung der zu übertragenden Information mit Hilfe eines Avionikmittels (11, 12) in Form von mindestens einem Bild bestimmt wird,
b) diese Darstellung in Form mindestens eines Bilds an das Schnittstellenmittel (3) übertragen wird und
c) das der Darstellung der Information entsprechende Bild von dem Schnittstellenmittel (3) auf einem Visualisierungsschirm (13) angezeigt wird,
**dadurch gekennzeichnet, dass** ein von dem Schnittstellenmittel (3) angezeigtes Bild mindestens eine sensible Zone aufweist, die von einem Bediener mit Hilfe geeigneter Mittel (15) bezeichnet und validiert werden kann und dass, wenn eine sensible Zone eines Bilds bezeichnet und validiert ist, das Schnittstellenmittel (3) an die Vorrichtung (2) die Koordinaten der sensiblen Zone über das Bild überträgt.

2. Verfahren nach Anspruch 1,
**dadurch gekennzeichnet, dass** das Avionikmittel (11), das eine Darstellung der Information bestimmt, Teil der Vorrichtung (2) ist.

3. Verfahren nach Anspruch 1,
**dadurch gekennzeichnet, dass** die Vorrichtung (2) Teil eines ersten Netzwerks (R1) von Avionikvorrichtungen (2) ist, dass das Schnittstellenmittel (3) Teil eines zweiten Netzwerks (R2) von Schnittstellenmitteln (3) ist und dass das Avionikmittel (12), das eine Darstellung der Information bestimmt, einem Schnittstellenmodul (12) entspricht, das zwischen dem ersten und zweiten Netzwerk (R1, R2) vorgesehen ist.

4. Verfahren nach einem der vorangehenden Ansprüche,
**dadurch gekennzeichnet, dass** ein Bediener die erneute Übertragung einer Information mit Hilfe des Schnittstellenmittels (3) verlangen kann.

5. Verfahren nach einem der vorangehenden Ansprüche,
**dadurch gekennzeichnet, dass** ebenfalls mindestens eine Angabe des Schnittstellenmittels (3) an die Vorrichtung (2) übertragen werden kann.

6. Verfahren nach einem der vorangehenden Ansprüche,
**dadurch gekennzeichnet, dass** ein von dem Schnittstellenmittel (3) angezeigtes Bild eine Vielzahl sensibler Zonen aufweist und dass die Summe der Flächen der Gruppe der sensiblen Zonen kleiner als ein vorbestimmter Prozentsatz der Gesamtfläche des angezeigten Bilds ist.

7. Verfahren nach einem der vorangehenden Ansprüche,
**dadurch gekennzeichnet, dass**, wenn die Vorrichtung (2) die Koordinaten einer ersten sensiblen Zone erhält, die bezeichnet und validiert wurde, erhält, die Konformität dieser Koordinaten überprüft wird und, wenn diese Koordinaten konform sind, die Vorrichtung (2) eine neue Information zurückschickt, deren entsprechendes Bild eine sensible Bestätigungszone aufweist, die von einem Bediener bezeichnet und validiert werden muss, um die ursprüngliche Bezeichnung und Validierung der ersten sensiblen Zone zu bestätigen.

8. Verfahren nach Anspruch 7,
**dadurch gekennzeichnet, dass** die sensible Bestätigungszone neben der ersten, ursprünglich bezeichneten und validierten sensiblen Zone vorgesehen ist.

9. On-Board-Informationsübertragungssystem eines Luftfahrzeugs, wobei das System (1) aufweist:
- mindestens eine Avionikvorrichtung (2),
- mindestens ein Schnittstellenmittel (3) zur Verfügung eines Bedieners,
- Informationsübertragungsmittel (4; e1, L1, 18, 12, 19, L2, e2), die die Vorrichtung (2) und das Schnittstellenmittel (3) verbinden,
- ein Avionikmittel (11, 12), um in Form von mindestens einem Bild eine Darstellung einer von der Vorrichtung (2) an das Schnittstellenmittel (3) zu übertragenden Information zu bestimmen und um diese Darstellung in Form von mindestens einem Bild an das Schnittstellenmittel (3) zu übertragen, wobei das Schnittstellenmittel (3) ausgebildet ist, um auf mindestens einem Visualisierungsschirm (13) das Bild anzuzeigen, das der Darstellung der Information entspricht,
**dadurch gekennzeichnet, dass** das Schnittstellenmittel (3) mindestens eine Cursorsteuervorrichtung (15) aufweist, die derart ausgebildet ist, dass sie von einem Bediener bedienbar ist und die mindestens umfasst:
- ein betätigbares Bezeichnungsmittel (16), das imstande ist, einen Cursor auf einem auf dem Visualisierungsschirm (13) angezeigtes Bild derart zu verlagern, dass eine sensible Zone des Bilds durch Erscheinen eines Markers bezeichnet wird, und
- ein betätigbares Validierungsmittel (17), das imstande ist, eine sensible Zone zu validieren, die mit dem Marker ausgestattet ist.

10. System nach Anspruch 9,
**dadurch gekennzeichnet, dass** das Avionikmittel (11) Teil der Vorrichtung (2) ist.

11. System nach Anspruch 9,
**dadurch gekennzeichnet, dass** die Vorrichtung (2) Teil eines ersten Netzwerks (R1) von Avionikvorrichtungen (2) ist, dass das Schnittstellenmittel (3) Teil eines zweiten Netzwerks (R2) von Schnittstellenmitteln (3) ist und dass das Avionikmittel (12) einem Schnittstellenmodul (12) entspricht, das zwischen dem ersten und zweiten Netzwerk (R1; R2) vorgesehen ist.

12. System nach einem der Ansprüche 9 bis 11,
**dadurch gekennzeichnet, dass** es ausgebildet ist, um ebenfalls die Übertragung mindestens einer Angabe des Schnittstellenmittels (3) an die Vorrichtung (2) zu erlauben.

## Claims

1. A process for transmitting information on an aircraft, from a device (2) of avionics type to an interface means (3) which is available to an operator of said aircraft, said device (2) and said interface means (3) being able to be connected together, process according to which, to transmit information from said device (2) to said interface means (3):
a) a representation of said information to be transmitted, in the form of at least one image, is determined with the aid of a means (11, 12) of avionics type;
b) this representation in the form of at least one image is transmitted to said interface means (3); and
c) said image corresponding to the representation of said information is displayed on a display screen (13) by said interface means (3),
**characterised in that** an image displayed by the interface means (3) comprises at least one sensitive zone that can be designated and validated by an operator with the aid of appropriate means (15), and **in that**, when a sensitive zone of an image is designated and validated, said interface means (3) transmits to said device (2) the co-ordinates of said sensitive zone on the image.

2. The process as claimed in claim 1,
**characterised in that** said means (11) of avionics type which determines a representation of said information forms part of said device (2).

3. The process as claimed in claim 1,
**characterised in that** said device (2) forms part of a first network (R1) of devices (2) of avionics type, **in that** said interface means (3) forms part of a second network (R2) of interface means (3), and **in that** said means (12) of avionics type which determines a representation of said information corresponds to an interface module (12) provided between said first and second networks (R1, R2).

4. The process as claimed in any one of the preceding claims,
**characterised in that** an operator can request the retransmission of information, with the aid of said interface means (3).

5. The process as claimed in any one of the preceding claims,
**characterised in that** at least one indication can also be transmitted from said interface means (3) to said device (2).

6. The process as claimed in any one of the preceding claims,
**characterised in that** an image displayed by said interface means (3) comprises a plurality of sensitive zones, and **in that** the sum of the areas of all of said sensitive zones is less than a predetermined percentage of the total area of said image displayed.

7. The process as claimed in any one of the preceding claims,
**characterised in that**, when said device (2) receives the co-ordinates of a first sensitive zone which has been designated and validated, the consistency of these co-ordinates is verified and, if these co-ordinates are consistent, said device (2) returns a new item of information, the corresponding image of which comprises a confirmation sensitive zone that must be designated and validated by an operator in order to confirm the initial designation and initial validation of said first sensitive zone.

8. The process as claimed in claim 7,
**characterised in that** said confirmation sensitive zone is provided alongside said first initially designated and validated sensitive zone.

9. An information transmission system carried onboard an aircraft, said system (1) comprising:
- at least one device (2) of avionics type;
- at least one interface means (3) available to an operator; and
- information transmission means (4; e1, L1, 18, 12, 19, L2, e2) capable of connecting together said device (2) and said interface means (3);
- a means (11, 12) of avionics type for determining, in the form of at least one image, a representation of information to be transmitted from said device (2) to said interface means (3) and for transmitting this representation in the form of at least one image to said interface means (3), said interface means (3) being formed so as to display, on at least one display screen (13), said image corresponding to the representation of said information,
**characterised in that** said interface means (3) comprises at least one cursor control device (15) which is designed in such a way as to be able to be actuated by an operator and which comprises at least:
- an actuatable designation means (16), capable of moving a cursor over an image displayed on the display screen (13) in such a way as to designate a sensitive zone of said image by depicting a marker; and
- an actuatable validation means (17), capable of validating a sensitive zone which is furnished with said marker.

10. The system as claimed in claim 9,
**characterised in that** said means (11) of avionics type forms part of said device (2).

11. The system as claimed in claim 9,
**characterised in that** said device (2) forms part of a first network (R1) of devices (2) of avionics type, **in that** said interface means (2) forms part of a second network (R2) of interface means (3), and **in that** said means (12) of avionics type corresponds to an interface module (12) provided between said first and second networks (R1, R2).

12. The system as claimed in any one of claims 9 to 11,
**characterised in that** it is formed so as to also allow the transmission at least of an indication from said interface means (3) to said device (2).
